# EUROPEAN PATENT APPLICATION

(11) **EP 4 375 810 A1**
(43) Date of publication of application: **29.05.2024**
(21) Application number: 23164981.5
(22) Date of filing: 29.03.2023
(51) Int. Cl.: G06F 3/02, G06F 1/16

(54) **PORTABLE KEYBOARD ASSEMBLY AND ELECTRONIC DEVICE**

(30) Priority: 28.11.2022 US 202263428401 P; 10.03.2023 CN 202310231351
(71) Applicant: Getac Technology Corporation, New Taipei City 221009 (TW)
(72) Inventor: LAI, Sin-Yi, Taipei City 11568 (TW); ZHONG, Shi-Liang, Taipei City 11568 (TW)
(74) Representative: Viering, Jentschura & Partner mbB Patent- und Rechtsanwälte

(57) **Abstract**

A portable keyboard assembly (D) and an electronic device (M) are provided. The portable keyboard assembly (D) includes a keyboard body (1), a handle (2), and a docking station (3). The keyboard body (1) includes a first side (11) and a second side (12) that are opposite to each other. The handle (2) is integrally formed at the first side (11). The handle (2) includes a gripping portion (21), and a thickness (T1) of any part of the gripping portion (21) is greater than a thickness (T2) of the keyboard body (1). The docking station (3) is pivotally connected to the keyboard body (1). The docking station (3) has a slot (30). The electronic device (M) includes the portable keyboard assembly (D) and a display device (R). The display device (R) is detachably inserted into the slot (30).

## Description

### FIELD OF THE DISCLOSURE

The present disclosure relates to a portable keyboard assembly and an electronic device, and more particularly to a portable keyboard assembly and an electronic device having a handle structure capable of improving structural strength.

### BACKGROUND OF THE DISCLOSURE

A keyboard assembly can be assembled to a touchscreen to meet the requirement of a user to input information by typing. When the user does not need the keyboard assembly, the touchscreen can be disassembled from the keyboard assembly. Conventionally, a handle is attached on the keyboard assembly for being gripped by the user. The existing handle is a retractable handle structure including linkage mechanisms having a plurality of components, and the existing handle can be stretched and folded. However, the joints between the components are lacking in structural strength and can be easily damaged by excessive force.

Therefore, how to overcome the above-mentioned disadvantages by improving the structural design of the handle has become one of the important issues to be solved in this field.

### SUMMARY OF THE DISCLOSURE

In response to the above-referenced technical inadequacy, the present disclosure provides a portable keyboard assembly. The portable keyboard assembly includes a keyboard body, a handle, and a docking station. The keyboard body includes a first side and a second side that are opposite to each other. The handle is integrally disposed on the first side. The handle includes a gripping portion, and a thickness of any part of the gripping portion is greater than a thickness of the keyboard body. The docking station is pivotally connected to the keyboard body. The docking station has a slot.

In another aspect, the present disclosure provides an electronic device. The electronic device includes a portable keyboard assembly and a display device. The portable keyboard assembly includes a keyboard body, a handle, and a docking station. The keyboard body includes a first side and a second side that are opposite to each other. The handle is integrally disposed on the first side. The handle includes a gripping portion, and a thickness of any part of the gripping portion is greater than a thickness of the keyboard body. The docking station is pivotally connected to the keyboard body. The docking station has a slot. The display device is detachably inserted into the slot. The signal connecting port is electrically connected to the display device, and the two hooking elements are fixed to the display device.

Therefore, in the portable keyboard assembly and the electronic device provided by the present disclosure, by virtue of "the handle being integrally disposed on the first side" and "the handle including a gripping portion, and a thickness of any part of the gripping portion being greater than a thickness of the keyboard body," a structural strength and weight of the handle can be strengthened so as to support the portable keyboard assembly and the display device to prevent the handle from being damaged.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The described embodiments may be better understood by reference to the following description and the accompanying drawings, in which:
FIG. 1 is a schematic view of a portable keyboard assembly according the present disclosure;
FIG. 2 is another schematic view of the portable keyboard assembly according the present disclosure;
FIG. 3 is yet another schematic view of the portable keyboard assembly according the present disclosure;
FIG. 4 is still another schematic view of the portable keyboard assembly according the present disclosure;
FIG. 5 is a schematic side view of the portable keyboard assembly according the present disclosure; and
FIG. 6 is a schematic exploded view of an electronic device according the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

### [Embodiment]

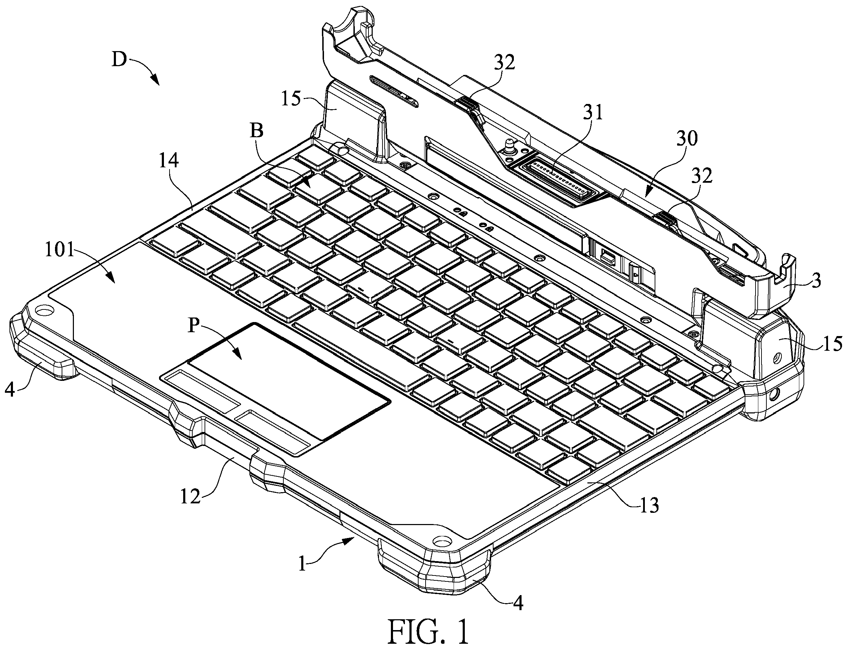

Referring to FIG. 1 to FIG. 3, an embodiment of the present disclosure provides a portable keyboard assembly D that includes a keyboard 1, a handle 2, and a docking station 3. The keyboard 1 includes a first side 11, a second side 12, a third side 13, and a fourth side 14. The first side 11 and the second side 12 are opposite to each other, and the third side 13 and the fourth side 14 are opposite to each other. The handle 2 is disposed on the first side 11. The handle 2 includes a gripping portion 21. The docking station 3 is pivotally connected to the keyboard body 1. The docking station 3 has a slot 30. The keyboard body 1 further includes a first surface 101 and a second surface 102 that are opposite to each other. The first surface 101 is used to accommodate a keyboard B and a touchscreen P. In addition, the docking station 3 is disposed on the first surface 101. Specifically, the docking station 3 is located between the handle 2 and the keyboard B.

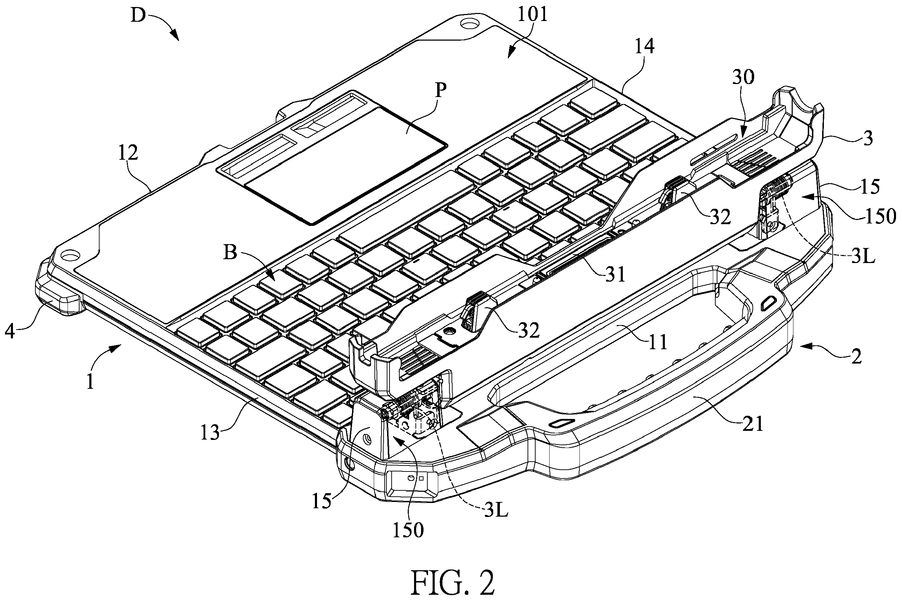

As shown in FIG. 2, the keyboard body 1 further includes two fixing portions 15. The two fixing portions 15 are disposed on the first surface 101 and are respectively located at two opposite sides of the docking station 3. Furthermore, the two fixing portions 15 have two accommodating grooves 150, respectively. The docking station 3 further includes a pivot shaft 3L, and two ends of the pivot shaft 3L respectively insert into the two accommodating grooves 150, such that the docking station 3 is rotatable relative to the keyboard body 1.

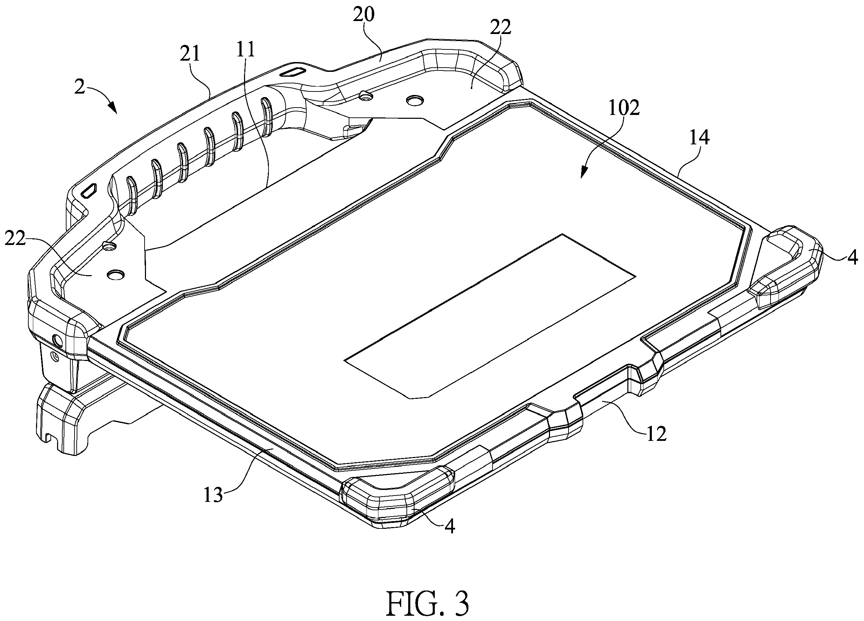

The handle 2 further includes two engaging portions 22 that are respectively disposed at two ends of the gripping portion 22. In the present disclosure, the handle 2 (including the gripping portion 21 and the two engaging portions 22) is a one-piece structure. In other words, the handle 2 cannot be further disassembled into smaller components. The two engaging portions 22 are fixedly connected to the second surface 102 of the keyboard body 1. A manner of fixedly connecting the two engaging portions 22 to the keyboard body 1 is not limited in the present disclosure. As shown in FIG. 3, the two engaging portions 22 are connected between the gripping portion 21 and the keyboard body 1, and the two engaging portions 22 protrude from the first side 11 of the keyboard body 1.

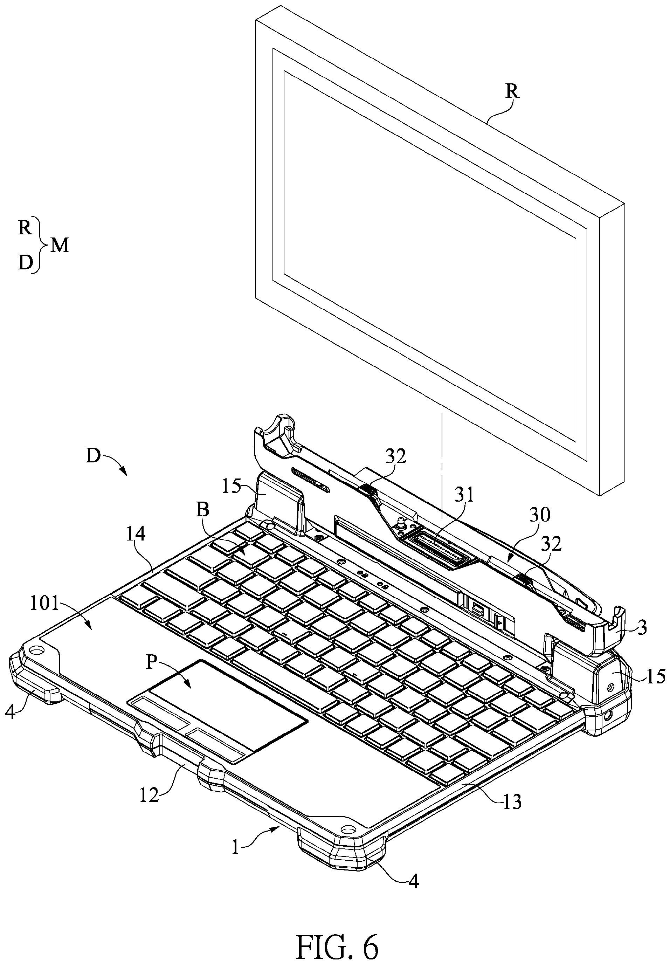

Then, referring to FIG. 6, the docking station 3 is used to dock with a matching element through the slot 30. For example, the matching element can be a display device R, but the present disclosure is not limited thereto. The docking station 3 further includes a signal connecting port 31 and two hooking elements 32. The signal connecting port 31 and the two hooking elements 32 are disposed in the slot 30, and the signal connecting port 31 is disposed between the two hooking elements 32. For example, the display device R can include a signal docking port (not shown in the figures) corresponding to the signal connecting port 31 and two fastening elements (not shown in the figures) corresponding to the two hooking elements 32. Specific implementations of the signal docking port and the two fastening elements are not limited in the present disclosure. Therefore, the display device R is detachably inserted into the slot 30, the signal connecting port 31 is electrically connected to the display device R, and the two hooking elements 32 are fixed to the display device R. Accordingly, the display device R and the portable keyboard assembly D can be assembled into a combined electronic device M that is substantially equivalent to a laptop computer.

When a user carries the combined electronic device M, the weight of the display device R and the portable keyboard assembly D is supported by the handle 2. As shown in FIG. 2 and FIG. 3, the two engaging portions 22 respectively correspond to the two fixing portions 15. An orthogonal projection of each of the engaging portions 22 that is projected onto the second surface 102 overlaps with an orthogonal projection of a corresponding one of the fixing portions 15 that is projected onto the second surface 102. Moreover, an orthogonal projection of each of the engaging portions 22 that is projected onto the second surface 102 is greater than an orthogonal projection of the corresponding one of the fixing portions 15 that is projected onto the second surface 102. Accordingly, the weight of the display device R can be evenly distributed to the two engaging portions 22 through the pivot shaft 3L of the docking station 3 and the two fixing portions 15 connected to the pivot shaft 3L. Therefore, a center of mass of the display device R will not be biased toward one of the engaging portions 22 so as to avoid damage to the one of the engaging portions 22 that bears the greater weight due to an uneven weight distribution on the two engaging portions 22. In addition, the issue that a linkage mechanism of the existing handle is easily damaged by an excessive force or repeated use due to the greater weight provided by a combination of the keyboard assembly and the touchscreen can be addressed.

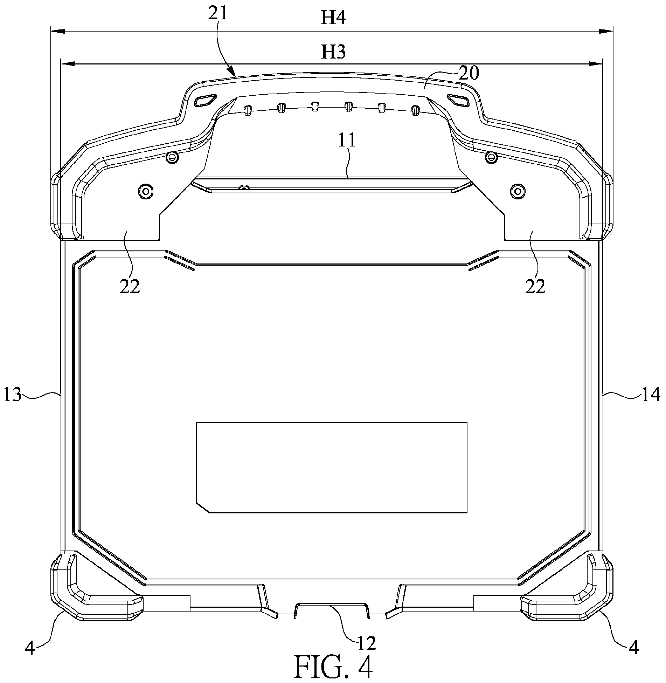

Referring to FIG. 3 to FIG. 5, the handle 2 has a contact surface 20 that is located at a same side as the second surface 102 of the keyboard body 1. As shown in FIG. 4, an outer edge of the contact surface 20 protrudes from the third side 13 and the fourth side 14 of the keyboard body 1, and a maximum distance H4 between two ends of the outer edge of the contact surface 20 is greater than a distance H3 between the third side 13 and the fourth side 14.

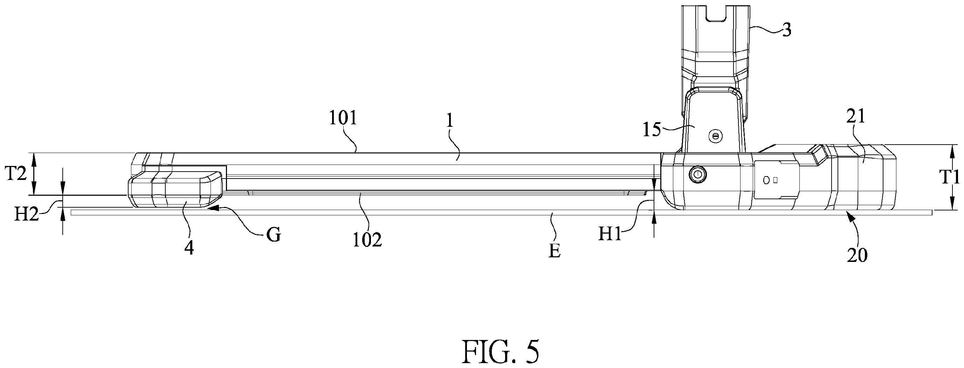

Referring to FIG. 5 and FIG. 6, when the keyboard body 1 is disposed on a horizontal plane E, the contact surface 20 abuts the horizontal plane E. A thickness T1 of any part of the gripping portion 21 is greater than a thickness T2 of the keyboard body 1. A distance between the gripping portion 21 and the first side 11 is smaller than a distance between the gripping portion 21 and the second side 12. Therefore, when the docking station 3 rotates relative to the keyboard body 1, a rotation axis and a center of mass of the docking station 3 is closer to the handle 2. By the abovementioned design, the smoothness that the display device R can be turned over and the stability of the keyboard body 1 can be improved.

In addition, the contact surface 20 and the second surface 102 of the keyboard body 1 have a first vertical distance H1 therebetween. When the keyboard body 1 is disposed on the horizontal plane E, the gripping portion 21 is used to lift the second surface 102, such that one part of the second surface 102 does not contact the horizontal plane E. In other words, one part of the second surface 102 close to the contact surface 20 is lifted, and another part of the second surface 102 away from the contact surface 20 remains in contact with the horizontal plane E.

Reference is further made to FIG. 5, in which the portable keyboard assembly further includes two supporting portions 4 that are symmetrically disposed at the second side 12 of the keyboard body 1. In one embodiment of the present disclosure, the two supporting portions 4 are respectively disposed at two corners of the keyboard body 1. Specifically, one of the two supporting portions 4 is located at a junction between the second side 12 and the third side 13, and the other one of the two supporting portions 4 is located at a junction between the second side 12 and the fourth side 14. Bottoms of the two supporting portions 4 and the second surface 102 of the keyboard body 1 have a second vertical distance H2 therebetween. In other words, a part of the second surface 102 that is close to the two supporting portions 4 is lifted. Therefore, the keyboard body 1 can be lifted through the structural design of the contact surface 20 of the handle 2 and the two supporting portions 4, such that the second surface 102 and the horizontal plane E are not in contact with each other.

Moreover, the first vertical distance H1 can be greater than or equal to the second vertical distance H2, and the present disclosure is not limited thereto. As shown in FIG. 5, when the first vertical distance H1 is greater than the second vertical distance H2 and the keyboard body 1 is placed on the horizontal plane E in a manner that the second surface 102 is parallel to the horizontal plane E, the bottom of any of the supporting portions 4 and the horizontal plane E are separated apart from each other by a gap G. Therefore, when the contact surface 20 of the handle 2 and the two supporting portions 40 contact the horizontal plane E, the first surface 101 and the second surface 102 of the keyboard body 1 are inclined relative to the horizontal plane E. A part of the keyboard body 1 near the handle 2 has a higher position, and another part of the keyboard body 1 near the two supporting portions 4 has a lower position. When the user uses the keyboard B on the portable keyboard assembly D, the part of the keyboard body 1 that is near the two supporting portions 4 is closer to the user. Therefore, the inclined arrangement of the keyboard body 1 is a more ergonomic design that helps to improve the comfort of a user using the keyboard B. On the other hand, when the first vertical distance H1 is equal to the second vertical distance H2, the second surface 102 is parallel to the horizontal plane E. That is to say, the keyboard body 1 is placed on the horizontal plane E in a strictly horizontal manner. Therefore, there is no gap G between the bottom of any of the supporting portions 4 and the horizontal plane E.

### [Beneficial Effects of the Embodiment]

In the portable keyboard assembly D and the electronic device M provided by the present disclosure, by virtue of "the handle 2 being integrally disposed on the first side 11" and "the handle 2 including a gripping portion 21, and a thickness T1 of any part of the gripping portion 21 being greater than a thickness T2 of the keyboard body 1," a structural strength and weight of the handle 2 can be strengthened so as to support the portable keyboard assembly D and the display device R mounted on the docking station 3.

Moreover, since the handle 2 of the portable keyboard assembly D is a one-piece structure, the handle 2 cannot be further disassembled into smaller components. Compared with the conventional handle which is a retractable handle structure composed of multiple components susceptible to be easily broken by an external force, the portable keyboard assembly D of the present disclosure includes the handle 2 and the keyboard body 1 having a stable junction therebetween. Therefore, the handle 2 of the present disclosure is not easily broken by the external force in the process of being used, thereby reducing the risk of damage to the display device R and the portable keyboard assembly D.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A portable keyboard assembly (D), **characterized by** comprising:
a keyboard body (1) having a first side (11) and a second side (12) that are opposite to each other;
a handle (2) integrally disposed on the first side (11), wherein the handle (2) includes a gripping portion (21), and a thickness (T1) of any part of the gripping portion (21) is greater than a thickness (T2) of the keyboard body (1); and
a docking station (3) pivotally connected to the keyboard body (1), wherein the docking station (3) has a slot (30).

2. The portable keyboard assembly (D) according to claim 1, wherein a distance between the gripping portion (21) and the first side (11) of the keyboard body (1) is smaller than a distance between the gripping portion (21) and the second side (12) of the keyboard body (1).

3. The portable keyboard assembly (D) according to claim 1, wherein the handle (2) has a contact surface (20); wherein, when the keyboard body (1) is disposed on a horizontal plane (E), the contact surface (20) abuts the horizontal plane (E).

4. The portable keyboard assembly (D) according to claim 3, wherein the keyboard body (1) further has a first surface (101) and a second surface (102) that are opposite to each other, the first surface (101) is used to accommodate a keyboard (B), the docking station (3) is disposed on the first surface (101), and the second surface (102) and the contact surface (20) are located on a same side; wherein, when the keyboard body (1) is disposed on the horizontal plane (E), the gripping portion (21) is used to lift the second surface (102), such that the second surface (102) does not contact the horizontal plane (E).

5. The portable keyboard assembly (D) according to claim 4, further comprising two supporting portions (4) that are symmetrically disposed at the second side (12).

6. The portable keyboard assembly (D) according to claim 5, wherein the contact surface (20) and the second surface (102) have a first vertical distance (H 1) therebetween, bottoms of the two supporting portions (4) and the second surface (102) have a second vertical distance (H2) therebetween, and the first vertical distance (H1) is greater than or equal to the second vertical distance (H2).

7. The portable keyboard assembly (D) according to claim 4, wherein the keyboard body (1) further includes two fixing portions (15) that are disposed on the first surface (101) and are respectively located at two opposite sides of the docking station (3), and the two fixing portions (15) have two accommodating grooves (150), respectively; wherein the docking station (3) further includes a pivot shaft (3L), and two ends of the pivot shaft (3L) respectively insert into the two accommodating grooves (150), so that the docking station (3) is rotatable relative to the keyboard body (1).

8. The portable keyboard assembly (D) according to claim 7, wherein the handle (2) further includes two engaging portions (22) that are respectively disposed at two ends of the gripping portion (21), the two engaging portions (22) are connected to the second surface (102) of the keyboard body (1), the two engaging portions (22) respectively correspond to the two fixing portions (15), and an orthogonal projection of each of the engaging portions (22) that is projected onto the second surface (102) overlaps with an orthogonal projection of a corresponding one of the fixing portions (15) that is projected onto the second surface (102).

9. The portable keyboard assembly (D) according to claim 8, wherein an orthogonal projection of each of the engaging portions (22) that is projected onto the second surface (102) is greater than an orthogonal projection of the corresponding one of the fixing portions (15) that is projected onto the second surface (102).

10. The portable keyboard assembly (D) according to claim 3, wherein the keyboard body (1) further includes a third side (13) and a fourth side (14) that are respectively located at two ends of the first side (11), and an outer edge of the contact surface (20) protrudes from the third side (13) and the fourth side (14).

11. The portable keyboard assembly (D) according to claim 10, wherein the handle (2) further includes two engaging portions (22) that are respectively disposed at two ends of the gripping portion (21), and the two engaging portions (22) are connected between the gripping portion (21) and the keyboard body (1).

12. The portable keyboard assembly (D)according to claim 11, wherein the two engaging portions (22) protrude from the first side (11).

13. The portable keyboard assembly (D) according to claim 1, wherein the docking station (3) further includes a signal connecting port (31) and two hooking elements (32), the signal connecting port (31) is disposed between the two hooking elements (32), and the docking station (3) is used to dock with a matching element through the slot (30); wherein, when the docking station (3) is used to dock with the matching element, the signal connecting port (31) is electrically connected to the matching element, and the two hooking elements (32) are fixed to the matching element.

14. An electronic device (M), **characterized by** comprising:
the portable keyboard assembly (D) as claimed in claims 1 to 13; and
a display device (R)_detachably inserted into the slot (30).
